# FASCICULE DE BREVET EUROPEEN

(11) **EP 0 689 616 B1**
(45) Date de publication et mention de la délivrance du brevet: **11.12.1996**
(21) Numéro de dépôt: 94910437.6
(22) Date de dépôt: 18.03.1994
(51) Int. Cl.: C22C 16/00, G21C 3/07

(54) **ALLIAGES DE ZIRCONIUM RESISTANT A LA CORROSION, UTILISABLES NOTAMMENT DANS LES REACTEURS A EAU**
KORROSIONSBESTÄNDIGE ZIRKONIUMLEGIERUNGEN, GEEIGNET ZUR VERWENDUNG IN WASSERGEKÜHLTEN REAKTOREN
CORROSION-PROOF ZIRCONIUM ALLOYS, IN PARTICULAR FOR WATER REACTORS

(30) Priorité: 19.03.1993 FR 9303199
(43) Date de publication de la demande: 03.01.1996
(73) Titulaire: COMMISSARIAT A L'ENERGIE ATOMIQUE, 75752 Paris Cédex 15 (FR)
(72) Inventeur: LEMAIGNAN, Clément, F-38340 Voreppe (FR); DEHAUDT, Philippe, F-38320 Eybens (FR)
(74) Mandataire: Des Termes, Monique
(86) Numéro de dépôt international: FR9400299
(87) Numéro de publication internationale: WO9421834

(56) Documents cités:
- DE-B- 1 202 985
- DE-B- 1 202 986
- DE-B- 1 241 998
- FR-A- 2 638 173
- US-A- 3 163 744
- US-A- 3 378 671

## Description

La présente invention a pour objet des alliages à base de zirconium présentant une résistance améliorée à la corrosion dans l'eau, utilisables notamment dans les réacteurs nucléaires à eau bouillante et les réacteurs nucléaires à eau pressurisée.

Dans les réacteurs de ce type, dits réacteurs thermiques, le combustible est refroidi par de l'eau naturelle ou de l'eau lourde, qui circule dans le coeur à une température assez élevée, par exemple de 250 à 320°C. Le combustible est séparé de cette eau de refroidissement par une gaine généralement réalisée en alliage à base de zirconium.

En effet, le zirconium a la particularité de laisser passer les neutrons (faible section de capture des neutrons) et de résister assez bien à la corrosion sous eau à la température de fonctionnement des réacteurs. Les alliages couramment utilisés dans ce type de réacteurs sont les Zircaloys® qui comportent des additions d'étain, de chrome, de fer et de nickel, et les alliages zirconium-niobium.

Ces alliages ont des tenues à la corrosion suffisantes pour les taux de combustion actuels qui sont de l'ordre de 35 à 45 000MW dt⁻¹.

En revanche, pour les objectifs futurs qui sont de laisser séjourner plus longtemps le combustible dans le coeur et d'atteindre des taux de combustion dépassant 65 à 75 000MWdt⁻¹, leur tenue à la corrosion risque d'être insuffisante.

On sait que la résistance à la corrosion des gaines en alliage de zirconium est liée à la formation d'une couche mince de zircone qui, généralement, ne doit pas dépasser 0,10mm pour des épaisseurs de gaines de 0,6 à 0,8mm.

En effet, au-delà de cette épaisseur la perte de résistance mécanique liée au développement de cette couche de zircone est trop importante ; de plus, il y a lieu de considérer le phénomène de desquamation, c'est-à-dire de décollement de la couche de zircone de forte épaisseur, qui conduit à la circulation des particules de zircone dans l'eau primaire du réacteur nucléaire.

Aussi, des recherches ont été entreprises pour améliorer la résistance à la corrosion de tels alliages de zirconium, soit par des traitements thermiques appropriés, soit par une modification de la composition des alliages, comme il est décrit par J. Thomazet et al dans Proceedings of a Technical Commitee Meeting, IAEA, Portland, Oregon USA 11-15 September 1989, p. 255-262, et par T. Isobe et al, 9th Inter. Conf. Zr in Nucl. Ind., Kobe, Japan, ASTM - STP 1132, p. 346.

Des alliages de zirconium-niobium modifiés pour améliorer leur résistance à la corrosion sont décrits dans le document DE-B-1 202 985 (Siemens). Dans ce document, on ajoute à l'alliage une très faible quantité de cérium (0,05 à 1%, de préférence 0,01 à 0,5%), ce qui permet de diminuer l'épaisseur de la couche d'oxyde de zirconium formée sur la gaine. Toutefois, les résultats donnés dans ce brevet ne montrent qu'une amélioration minime de la tenue à la corrosion des alliages Zr-Nb.

Ainsi, jusqu'à présent, il n'a pas été possible d'obtenir une amélioration suffisante de la résistance à la corrosion des alliages de zirconium.

La présente invention a précisément pour objet un procédé pour améliorer la résistance à la corrosion dans l'eau du zirconium et des alliages de zirconium, qui permet d'atteindre cet objectif.

Ce procédé consiste à ajouter au zirconium ou à l'alliage de zirconium , au moins un élément métallique capable de stabiliser la phase quadratique de la zircone, cet élément étant ajouté en quantité suffisante pour stabiliser sous forme quadratique la couche de zircone qui se développe à la surface du zirconium ou de l'alliage de zirconium au contact de l'eau.

Ainsi, selon l'invention, on résout les problèmes de corrosion dans l'eau du zirconium et de ses alliages en stabilisant la couche de zircone qui se développe à la surface de l'alliage sous la forme quadratique.

En effet, on a remarqué que lors de l'oxydation d'un alliage de zirconium dans l'eau à haute température, on avait une succession de deux étapes. Dans une première étape, l'oxyde de zirconium qui se forme par réaction avec l'eau, est protecteur et la croissance de la couche d'oxyde de zirconium se poursuit dans la phase quadratique avec un profil de vitesse parabolique. Dans la deuxième étape, la couche d'oxyde sous forme quadratique se transforme en couche d'oxyde sous forme cubique ou monoclinique, ce qui provoque une fissuration fine de la zircone, lui fait perdre son caractère protecteur, et induit une transition de cinétique de corrosion.

Selon l'invention, on stabilise la couche de zircone pour éviter ou retarder cette transformation et maintenir à un niveau faible la cinétique de corrosion.

Les éléments métalliques susceptibles de stabiliser la phase quadratique de la zircone peuvent être par exemple le cérium ou le magnésium.

En effet, ces éléments métalliques ont un effet satisfaisant de stabilisation de la phase quadratique et ils ne provoquent pas d'autres effets indésirables lorsqu'ils sont utilisés dans un réacteur nucléaire.

Ainsi, ces éléments après activation neutronique, ne deviennent pas des émetteurs bêta de forte énergie susceptibles de contribuer à la corrosion de l'alliage de zirconium en augmentant la radiolyse de l'eau par le rayonnement bêta. Par ailleurs, ils sont solubles dans le zirconium et leur section de capture des neutrons thermiques est faible.

De préférence, on utilise le cérium car il est soluble dans le zirconium jusqu'à une teneur de 6% en atomes à 850°C. De plus, il reste à la valence +4 lorsqu'il est inséré dans le réseau de la zircone quadratique, ce qui évite la formation de lacunes d'oxygène dont la présence se traduit par une augmentation de la vitesse de diffusion et donc de la vitesse de corrosion, car l'oxygène doit traverser cette phase pour alimenter la couche de zircone. Enfin, la section de capture des neutrons thermiques du cérium est faible (0,7 barn à 0,025 eV).

Lorsqu'on utilise le cérium, on l'ajoute de préférence en quantité telle qu'il représente 2 à 10% en poids de l'alliage final.

Lorsqu'on utilise le magnésium, des quantités représentant 2 à 10 % en poids de l'alliage final sont également appropriées.

On l'utilise ainsi en quantité nettement supérieure à celle prévue dans le document allemand DE-B- 1 202 985. Avec cette teneur en cérium, la phase quadratique est nettement stabilisée par effet chimique.

Le procédé de l'invention s'applique à tous les alliages à base de zirconium, et plus particulièrement à ceux qui sont utilisés dans les réacteurs nucléaires à eau tels que les alliages du type Zircaloy.

Aussi, l'invention a également pour objet des alliages de zirconium comportant une addition de cérium.

Selon un premier mode de réalisation de l'invention, l'alliage de zirconium comprend :
- 2 à 10% en poids de Ce,
- 500 à 2000 ppm d'oxygène,
le reste étant constitué par du zirconium et des impuretés accidentelles.

Selon un second mode de réalisation, l'alliage de zirconium comprend :
- 2 à 10% en poids de Ce,
- 500 à 2000ppm d'oxygène, et
- 0,01 à 1,5 % en poids d'au moins un élément choisi parmi Sn, Nb, Fe, Cr, Ni, Mo, Ta, Ca, Mg, V, Al, Si et Ti à condition que le total de ces éléments soit d'au plus 15% en poids,
le reste étant constitué par du zirconium et des impuretés accidentelles.

Selon un troisième mode de réalisation de l'invention, l'alliage de zirconium est un alliage du type Zircaloy, qui comprend :
- 2 à 10% en poids de cérium,
- environ 1,5% en poids d'étain, et
- 0,3% en poids au total de fer et de chrome,
le reste étant constitué par du zirconium et des impuretés accidentelles.

Les alliages décrits ci-dessus peuvent être fabriqués par des procédés classiques, par exemple par fusion sous vide en four à électrode consommable, car la tension de vapeur du cérium en phase liquide est équivalente à celle de l'étain, ce qui ne conduit pas à des problèmes particuliers à la fusion. Après une série de fusions sous vide, l'alliage peut être forgé et laminé à chaud, puis laminé à froid. Les traitements thermiques dans la phase finale de l'élaboration peuvent être modifiés pour mettre à profit la solubilité du cérium à haute température en phase alpha du zirconium. Ainsi, on peut réaliser un traitement thermique d'homogénéisation par mise en solution à une température de 550 à 863°C, par exemple de 850°C, avant d'effectuer une trempe et un éventuel traitement de recuit pour obtenir une très fine précipitation de cérium.

Les alliages de zirconium décrits ci-dessus peuvent être utilisés comme éléments de structure dans les réacteurs nucléaires refroidis à l'eau, en particulier dans les crayons et assemblages de combustibles nucléaires, c'est-à-dire dans les tubes-guides, les grilles et les gaines des crayons.

Dans le cas des gaines, ils peuvent être utilisés également dans la partie externe des gaines à deux couches (gaines Duplex) qui sont revêtues intérieurement de zirconium de haute pureté ou de tout autre métal réduisant les phénomènes de rupture par interaction entre les pastilles et la gaine.

On peut encore utiliser ces alliages dans les boîtiers des réacteurs à eau bouillante, c'est-à-dire dans les éléments cylindriques de section carrée qui entourent les assemblages de combustibles et évitent des instabilités hydrauliques liées à l'ébullition locale.

De même, dans les réacteurs à eau lourde, les tubes de force actuellement réalisés en alliage zirconium-niobium qui sont sujets à des problèmes d'oxydation, pourraient être réalisés avec les alliages de l'invention.

D'autres caractéristiques et avantages de l'invention apparaîtront mieux à la lecture de la description qui suit se référant au dessin annexé sur lequel :
- la figure 1 illustre de façon schématique l'évolution de la couche de zircone qui se forme sur une gaine en zirconium par oxydation dans l'eau, et
- la figure 2 est un diagramme représentant les variations de l'épaisseur de la couche de zircone en fonction du temps, lors d'une oxydation dans l'eau.

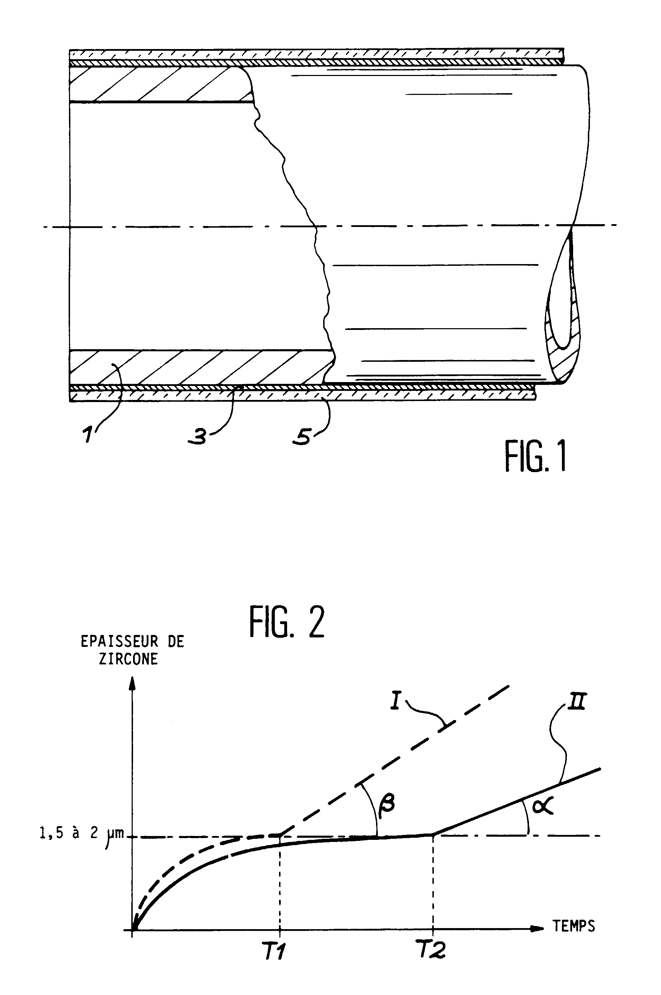

Sur la figure 1, on voit que, lors de l'oxydation dans l'eau d'une gaine en zirconium (1), il se forme sur la surface de la gaine une couche (3) d'oxyde de zirconium sous forme quadratique dont l'épaisseur augmente au cours du temps.

Sur la figure 2 (courbe I) qui représente les variations de l'épaisseur de cette couche en fonction du temps, on voit que l'épaisseur augmente lentement au début (1ère étape) avec un profil de vitesse parabolique pour atteindre le point T₁ à partir duquel se produit la transition de phase de la zircone.

A ce stade qui correspond au début de la deuxième étape du processus de corrosion, comme on peut le voir sur la figure 1, la partie extérieure de la couche de zircone (3) sous forme quadratique se déstabilise et se transforme en zircone cubique ou monoclinique (5).

Cette transformation est associée à une fissuration fine de la zircone qui perd de ce fait son caractère protecteur. Ceci se traduit par une cinétique de corrosion accrue.

Ainsi, comme on peut le voir sur la figure 2, après le point T₁, l'épaisseur de la couche de zircone augmente linéairement avec le temps.

Sur la figure 2, la courbe II illustre les résultats obtenus lorsque, conformément à l'invention, on ajoute au zirconium ou à l'alliage de zirconium, un élément métallique tel que Ce, capable de stabiliser la phase quadratique de la zircone.

Dans ce cas, le processus d'oxydation comprend également deux étapes, mais la durée de la première étape, jusqu'à T_{2,} qui correspond au développement de la couche de zircone quadratique, est beaucoup plus longue. Par ailleurs, dans la deuxième étape la vitesse de corrosion après la transition T₂ est plus faible (l'angle α étant plus petit que l'angle β).

Ainsi, le procédé de l'invention permet d'améliorer de façon importante la résistance à la corrosion du zirconium et des alliages de zirconium.

A titre d'exemple, le tableau ci-dessous donne plusieurs compositions d'alliages (en % en poids) conformes à l'invention, alliages qui contiennent en outre 1000 à 1500ppm d'oxygène.

**TABLEAU**

| EX | Ce | Fe | Cr | Zr |
|---|---|---|---|---|
| 1 | 3 | - | - | reste |
| 2 | 6 | - | - | reste |
| 3 | 9 | - | - | reste |
| 4 | 3 | 0,2 | 0,1 | reste |
| 5 | 6 | 0,2 | 0,1 | reste |
| 6 | 9 | 0,2 | 0,1 | reste |

Ces alliages sont préparés par fusion en électrode sous vide et ils résistent mieux à la corrosion que les alliages connus.

## Revendications

1. Procédé pour améliorer la résistance à la corrosion dans l'eau du zirconium et des alliages de zirconium, caractérisé en ce qu'il consiste à ajouter au zirconium ou à l'alliage de zirconium au moins un élément métallique capable de stabiliser la phase quadratique de la zircone, cet élément étant ajouté en quantité suffisante pour stabiliser sous forme quadratique la couche de zircone qui se développe à la surface du zirconium ou de l'alliage de zirconium au contact de l'eau.

2. Procédé selon la revendication 1, caractérisé en ce que cet élément est Ce ou Mg.

3. Procédé selon la revendication 1, caractérisé en ce que cet élément est Ce et en ce qu'on l'ajoute en quantité telle qu'il représente 2 à 10% en poids de l'alliage final.

4. Alliage de zirconium, caractérisé en ce qu'il comprend :
- 2 à 10% en poids de Ce, et
- 500 à 2000ppm d'oxygène, le reste étant constitué par du zirconium et des impuretés accidentelles.

5. Alliage de zirconium, caractérisé en ce qu'il comprend :
- 2 à 10% en poids de Ce,
- 500 à 2000ppm d'oxygène, et
- 0,01 à 1,5% en poids d'au moins un élément choisi parmi Sn, Nb, Fe, Cr, Ni, Mo, Ta, Ca, Mg, V, Al, Si et Ti à condition que le total de ces éléments soit d'au plus 15% en poids,
le reste étant constitué par du zirconium et des impuretés accidentelles.

6. Alliage selon la revendication 4, caractérisé en ce qu'il comprend 3 à 9% en poids de cérium.

7. Alliage selon la revendication 5, caractérisé en ce qu'il comprend :
- 3 à 9% en poids de cérium,
- 1000 à 1500ppm d'oxygène,
- 0,2% en poids de fer, et
- 0,1% en poids de chrome,
le reste étant constitué par du zirconium et des impuretés accidentelles.

8. Alliage de zirconium, caractérisé en ce qu'il comprend :
- 2 à 10% en poids de cérium,
- environ 1,5% en poids d'étain, et
- 0,3% en poids au total de fer et de chrome,
le reste étant constitué par du zirconium et des impuretés accidentelles.

9. Utilisation d'un alliage selon l'une quelconque des revendications 4 à 7, comme matériau de structure ou comme gaine d'élément combustible dans un réacteur nucléaire refroidi à l'eau.

## Patentansprüche

1. Verfahren zur Verbesserung der Korrosionsbeständigkeit von Zirkon und Zirkonlegierungen in Wasser,
**dadurch gekennzeichnet,** daß es darin besteht, dem Zirkon oder der Zirkonlegierung wenigstens ein metallisches Element zuzusetzen, das fähig ist, die quadratische Phase des Zirkonoxids zu stabilsieren, wobei dieses Element in ausreichender Menge zugesetzt wird, um die sich auf der Oberfläche des Zirkons oder der Zirkonlegierung im Kontakt mit Wasser entwickelnde Schicht in quadrischer Form zu stabilisieren.

2. Verfahren nach Anspruch 1, dadurch gekennzeichnet, daß dieses Element Ce oder Mg ist.

3. Verfahren nach Anspruch 1, dadurch gekennzeichnet, daß dieses Element Ce ist, und dadurch ,daß man es in einer solchen Menge zusetzt, daß es 2 bis 10 Gew.-% der Endlegierung darstellt.

4. Zirkonlegierung, dadurch gekennzeichnet, daß sie enthält:
- 2 bis 10 Gew.-% Ce, und
- 500 bis 2000ppm Sauerstoff, wobei der Rest gebildet wird durch Zirkon und unbeabsichtigte Verunreinigungen.

5. Zirkonlegierung, dadurch gekennzeichnet, daß sie enthält:
- 2 bis 10 Gew.-% Ce,und
- 500 bis 2000ppm Sauerstoff, und
- 0,01 bis 1,5 Gew.-% von wenigstens einem Element, ausgewählt unter Sn, Nb, Fe, cr, Ni, Mo, Ta, Ca, Mg, V, Al, Si und Ti unter der Voraussetzung, daß die Gesamtheit dieser Elemente höchstens 15 Gew.-% ausmacht,
wobei der Rest gebildet wird durch Zirkon und unbeabsichtigte Verunreinigungen.

6. Legierung nach Anspruch 4, dadurch gekennzeichnet, daß sie 3 bis 9 Gew.-% Cerium enthält.

7. Legierung nach Anspruch 5, dadurch gekennzeichnet, daß sie enthält:
- 3 bis 9 Gew.-% Cerium,
- 1000 bis 1500ppm Sauerstoff,
- 0,2 Gew.-% Eisen, und
- 0,1 Gew.-% Chrom,
wobei der Rest gebildet wird durch Zirkon und unbeabsichtigte Verunreinigungen.

8. Zirkonlegierung, dadurch gekennzeichnet, daß sie enthält:
- 2 bis 10 Gew.-% Cerium,
- ungefähr 1,5 Gew.-% Zinn, und
- 0,3 Gew.-% Eisen und Chrom zusammen,
wobei der Rest gebildet wird durch Zirkon und unbeabsichtigte Verunreinigungen.

9. Verwendung einer Legierung nach einem der Ansprüche 4 bis 7 als Strukturmaterial oder als Hülle für Brennelemente in einem wassergekühlten Kernreaktor.

## Claims

1. Process for improving the corrosion resistance in water of zirconium and zirconium alloys, characterized in that it consists of adding to the zirconium or zirconium alloy at least one metallic element able to stabilize the tetragonal phase of the zirconia, said element being added in an adequate quantity to stabilize in tetragonal form the zirconia layer developing on the surface of the zirconium or zirconium alloy on contact with water.

2. Process according to claim I, characterized in that said element is Ce or Mg.

3. Process according to claim 1, characterized in that said element is Ce and that it is added in a quantity such that it represents 2 to 10 wt.% of the final alloy.

4. Zirconium alloy, characterized in that it comprises 2 to 10 wt.% Ce and 500 to 2000 ppm oxygen, the residue being constituted by zirconium and accidental impurities.

5. Zirconium alloy, characterized in that it comprises 2 to 10 wt.% Ce, 500 to 2000 ppm oxygen and 0.1 to 1.5 wt.% of at least one element chosen from among Sn, Nb, Fe, Cr, Ni, Mo, Ta, Ca, Mg, V, Al, Si and Ti, provided that the total of said elements is at the most 15 wt.%, the residue being constituted by zirconium and accidental impurities.

6. Alloy according to claim 4, characterized in that it comprises 3 to 9 wt.% cerium.

7. Alloy according to claim 5, characterized in that it comprises 3 to 9 wt.% cerium, 1000 to 1500 ppm oxygen, 0.2 wt.% iron and 0.1 wt.% chromium, the residue being constituted by zirconium and accidental impurities.

8. Zirconium alloy, characterized in that it comprises 2 to 10 wt.% cerium, approximately 1.5 wt.% tin and 0.3 wt.% in all of iron and chromium, the residue being constituted by zirconium and accidental impurities.

9. Use of an alloy according to any one of the claims 4 to 7 as a structural material or as a fuel element can in a water-cooled nuclear reactor.
